(19) Europäisches Patentamt
European Patent Office
Office européen des brevets

(11) EP 2 620 837 A1

(12) EUROPEAN PATENT APPLICATION

(43) Date of publication:
31.07.2013 Bulletin 2013/31

(51) Int Cl.:
G06F 1/20 (2006.01)　　　G06F 1/32 (2006.01)

(21) Application number: 13151277.4

(22) Date of filing: 15.01.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 24.01.2012 JP 2012012301

(71) Applicant: Hitachi Ltd.
Tokyo 100-8280 (JP)

(72) Inventors:
• Mase, Masayoshi
Tokyo, 100-8220 (JP)

• Okitsu, Jun
Tokyo, 100-8220 (JP)
• Nojiri, Tohru
Tokyo, 100-8220 (JP)
• Saito, Tatsuya
Tokyo, 100-8220 (JP)

(74) Representative: MERH-IP
Matias Erny Reichl Hoffmann
Paul-Heyse-Strasse 29
80336 München (DE)

(54) **Operation management method of information processing system**

(57) Power saving of a data center is realized by learning a correlation between a state of cooling efficiency of the entire IT equipment units (101a - 103b) and a workload of each IT equipment unit (101a - 103b) from an operation history (10) and placing a workload on an IT equipment unit (101a - 103b) by using the correlation. An IT workload placement optimization function (20) samples data from an operation history (10) of various IT equipment units (101a - 103b) in a server room (100) by using three criteria of temperature, workload, and time, classifies the data into cooling efficiency conditions of the entire IT equipment units (101a-103b), and outputs a workload placement directive for determining placement of workload on each IT equipment unit (101a - 103b) from the correlation between the cooling efficiency condition and the workload to a workload management server (160), so that the workload management server (160) can effectively extract influence on the cooling efficiency from the operation history (10) and use the influence to place the workload.

FIG. 1

**Description**

FIELD OF THE INVENTION

The present invention relates to an operation management method of an information processing system including a plurality of information equipment units, in particular to a workload placement technique necessary to realize power saving of an entire information processing system.

BACKGROUND OF THE INVENTION

For example, power consumption of an information processing system such as a data center tends to increase year by year. Whole optimization of information technology (IT) equipment units such as server devices, storage devices, and network devices included in a data center and air conditioners is required to save power, and various power saving methods considering air conditioning are proposed.

In U.S. Patent Application Publication No. 2011/0161968, zones are specified in a server room, a cooling efficiency index value is calculated for each zone from index values of IT equipment units, and workload is placed for each zone on the basis of the above calculation. An air conditioner in a zone where no workload is placed is stopped.

In U.S. Patent Application Publication No. 2006/0259621, regarding a required workload, workload is placed on the basis of a history of the lowest power consumption among histories. In a method for placing workload to a plurality of servers in a data center, a profile of a requested workload is compared with history profiles, and the requested workload is placed to a server according to a history where the power of the server and air conditioning is lowest. If there is no suitable history, the workload is randomly placed. The history profile includes a position of the server, class, operation information, inlet air temperature, exhaust air temperature, type of workload, and power of the server and air conditioning. The power of the server and air conditioning is obtained from the inlet and exhaust air temperatures of the server, specific heat, and air volume or measured by a power meter.

In Japanese Unexamined Patent Application Publication No. 2007-179437, an overheated computer and a sparsely-operated computer are extracted on the basis of temperature distribution and operation information of computers in a management system of a plurality of computers and software is moved from the overheated computer to the sparsely-operated computer. After extracting target computers, powers of the computers and powers of the air conditioning before and after the move of the software are compared and whether or not the software should be moved is determined. The power of the computer is obtained from operation information, the power of the air conditioning is obtained from temperature distribution, and the temperature distribution is obtained from temperature sensors, temperature history, and operation information.

In Japanese Unexamined Patent Application Publication No. 2011-034578, a server workload placement is determined by a correlation between the amount of heat generation of the server and the cooling capacity of air conditioning. In this case, the temperature distribution of the server room is obtained from the amount of heat generation of the server by three-dimensional thermal fluid simulation and power consumption of the air conditioning required to cool the server room is calculated. Workload placement is determined so that the sum of the power consumption of the server and the power consumption of the air conditioning is the smallest.

In Japanese Unexamined Patent Application Publication No. 2011-008822, time series data of workload is statistically processed and index value of the workload is calculated. Workload placement is determined so that the total power consumption of IT equipment and air conditioning equipment is the smallest according to the index value of the workload, that is, a predicted value.

SUMMARY OF THE INVENTION

In Japanese Unexamined Patent Application Publication No. 2007-179437, the current temperature is measured and the workload is placed based on the current temperature. However, it is not necessarily optimal to place the workload to a low temperature position.

In U.S. Patent Application Publication No. 2011/0161968, Japanese Unexamined Patent Application Publication Nos. 2011-034578 and 2011-008822, the three-dimensional thermal fluid simulation is used. However, there is a problem that the three-dimensional thermal fluid simulation requires many man-hours to create a model, so that introduction and maintenance costs increase. Further, the model needs to be created not only when the system is introduced, but also every time the IT equipment configuration is changed.

Although there is a method of determining workload placement from only the operation history data as in U.S. Patent Application Publication No. 2006/0259621, the method only performs workload placement according to an optimal pattern in the history, so that workload is randomly placed for a workload pattern that is not included in the history.

Therefore, a method is required which can derive a cooling efficiency of an unknown pattern using an operation history without using the three-dimensional thermal fluid simulation.

An object of the present invention is to provide an operation management method of an information processing system, which realizes integrated power saving operation management in an information processing system including a plurality of IT equipment units and cooling facilities thereof.

To achieve the above object, the present invention provides an operation management method of an information processing system including an execution processing unit and a plurality of information technology (IT) equipment units. The execution processing unit obtains data including time information, environment information, and workload information from an operation history of a plurality of the IT equipment units, calculates a feature value from the data obtained from the operation history, classifies a cooling efficiency of the entire IT equipment units on the basis of the calculated feature value, calculates statistics information of an amount of workload of each IT equipment unit for each class of the cooling efficiency, and obtains a workload placement index value of the IT equipment unit on the basis of the calculated statistics information.

Effect of the Invention

According to the present invention, it is possible to derive workload placement priority considering the cooling efficiency from the operation history, so that power consumption of the information processing system can be reduced.

BRIEF DESCRIPTION OF THE DRAWINGS

Fig. 1 is a diagram showing an example of an entire configuration of an information processing system according to a first embodiment;
Fig. 2 is a block diagram showing an example of an IT workload placement optimization function according to the first embodiment;
Fig. 3 is a flowchart showing an example of a cooling efficiency learning method according to the first embodiment;
Fig. 4 is a diagram showing an example of a server rack arrangement according to the first embodiment;
Fig. 5 is a diagram showing an example of operation history data according to the first embodiment;
Fig. 6 is a diagram showing an example of cooling efficiency class according to the first embodiment;
Fig. 7 is a diagram showing an example of workload statistics for each cooling efficiency condition according to the first embodiment;
Fig. 8 is a diagram showing an example of a workload placement priority calculation result according to the first embodiment;
Fig. 9 is a diagram showing an example of workload statistics for each cooling efficiency condition according to a second embodiment;
Fig. 10 is a diagram showing an example of a workload placement priority calculation result according to the second embodiment;
Fig. 11 is a block diagram showing an example of an IT workload placement optimization function according to a third embodiment;
Fig. 12 is a diagram showing an example of a workload placement priority calculation result according to the third embodiment;
Fig. 13 is a diagram showing an example of a workload placement priority calculation according to a fifth embodiment; and
Fig. 14 is a diagram showing an example of a server rack arrangement according to a sixth embodiment.

DETAILED DESCRIPTION OF THE PREFERRED EMBODIMENTS

There is a correlation between temperature distribution and power consumption of an information processing system in a data center or the like in which the present invention is implemented, so that when leveling the temperature distribution so as not to generate a heat zone, power saving is achieved. In the present invention, a heat zone is often generated by limited factors, so that the feature of the heat zone is learned. Specifically, in the present invention, power saving is realized by placing a workload on an IT equipment unit other than IT equipment units that adversely affect cooling efficiency. By focusing on a correlation between a state of cooling efficiency of the entire IT equipment and a workload of each IT equipment unit, the correlation is used to place a workload on an IT equipment unit.

In a preferred aspect of the present invention, a record in an operation history includes at least a time stamp, environment information of a server room which is an installation room in which IT equipment is installed, and IT equipment unit workload information. The aspect has a function to handle the above pieces of information as one record by associating the pieces of information with each other even if the above pieces of information are separate from each other when they are obtained. A data obtaining method includes a method of obtaining data on the basis of time, the environment information, and the workload information in the operation history.

Next, in a preferred aspect of the present invention, the cooling efficiency of the entire server room is classified. The cooling efficiency of the entire server room tends to be affected by warm air which is exhausted from a part of IT equipment units and flows into an inlet of an equipment unit of an IT server. Therefore, it is possible to extract an IT equipment unit that adversely affects the cooling efficiency by using statistics information of the amount of workload of an IT equipment unit such as a server when the cooling efficiency is good and bad.

Hereinafter, embodiments of the present invention will be described with reference to the drawings. Although in the embodiments described below, an air conditioning is mainly illustrated as a cooling facility, needless to say, the embodiments can be applied to a case in which a facility other than the air conditioning is used.

First Embodiment

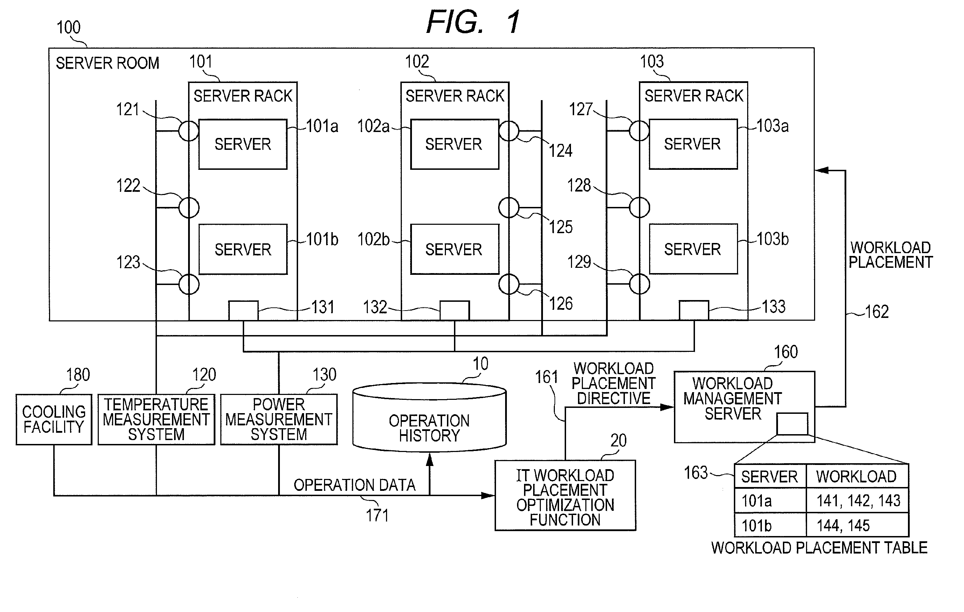

Fig. 1 shows an example of an entire configuration to which an operation management method of an information processing system according to a first embodiment is applied. The information processing system of the present embodiment includes a server room 100 which is an installation room where IT equipment units to be managed by the operation management are installed, a temperature measurement system 120, a power measurement system 130, an operation history 10, an IT workload placement optimization function 20, and a workload management server 160 which are used to perform the operation management, and a cooling facility 180 which cools the server room 100 which is the installation room. Each of the temperature measurement system 120, the power measurement system 130, and the IT workload placement optimization function 20 can be a server which is a normal computer. An execution processing unit which performs all operation management shown in Fig. 1 except for the server room 100 and the cooling facility 180 can be one server including a storage unit that stores the operation history 10 and a workload placement table 163, a processing unit including a central processing unit (CPU) that executes various functional programs, and an input/output unit that inputs and outputs various data. Therefore, in this specification, the temperature measurement system 120, the power measurement system 130, the operation history 10, the IT workload placement optimization function 20, and the workload management server 160, which are used to perform the operation management, may be collectively referred to as an execution processing unit that performs the operation management.

The server room 100, which is an installation room where a plurality of IT equipment units to be managed by the operation management are installed, includes server racks 101 to 103. Regarding the server racks, the server rack 101 includes servers 101a and 101b, the server rack 102 includes servers 102a and 102b, and the server rack 103 includes servers 103a and 103b. The number of the server racks is not limited to three and the number of the servers in each server rack is not limited to two.

A workload can be placed on each server by the workload management server 160. The workload management server 160 is connected to each IT equipment unit in the server room 100 through a management network not shown in the drawings and performs workload management by the workload placement table 163. As shown in Fig. 1, workloads 141 to 143 are placed on the server 101a and workloads 144 and 145 are placed on the server 101b. Here, the workload includes, for example, an application that operates on a virtual machine (VM) in a virtualized environment or on a real server.

In the present embodiment, the IT equipment units are only servers for the sake of explanation. However, storage devices and network devices may be included as the IT equipment units. Although there is only one workload management server, a plurality of workload management servers may be included or the servers 101a to 103b that perform calculation processing in the server room 100 may also operate as the workload management server.

The servers 101a to 103b include a power supply control function, and when no workload is placed on a server or servers, it is possible to reduce power consumption of the IT equipment by cutting power of a blade or blades or cutting power of a chassis or chassis. On the other hand, when a workload is placed on a server, heat generated by processing the workload is cooled by the cooling facility 180. In this case, the setting of the cooling facility 180 is adjusted according to the power consumption of each IT equipment unit, so that it is possible to reduce the power consumption of the cooling facility 180.

In the present embodiment, as a method for obtaining environment information in the server room 100, temperature measurement points 121 to 129 are provided at air inlets of each rack 101 to 103. For example, the temperature measurement point 121 measures the temperature of an upper portion of the server rack 101, the temperature measurement point 122 measures the temperature of a middle portion of the server rack 101, and the temperature measurement point 123 measures the temperature of a lower portion of the server rack 101. The number of temperature sensors disposed in the server room is not necessarily the same as that of the IT equipment units. Although, in the present embodiment, the temperature sensors are disposed at the air inlets of the rack, if the IT equipment unit has an inlet air temperature sensor, information from the inlet air temperature sensor of the IT equipment unit may be used instead of information from the above temperature sensor. The temperature information measured by each temperature sensor is collected by the temperature measurement system 120.

At the temperature measurement points 121 to 129 such as the temperature sensors in the server room, an error may be occur in the measurement result of the temperature sensors. In this case, a calibration may be performed based on the measurement result. The calibration method includes, for example, calculating variation and offset of the measurement result from a statistical model. Further, reference temperature may be different between a temperature sensor included in an IT equipment unit and an external temperature sensor, so that the temperature measurement system 120 may have a function to perform calibration of temperature.

In the present embodiment, as workload information which is representative information of workload of an IT equipment unit, power consumption of each server is measured at power measurement points 131 to 133 disposed in the server racks 101 to 103 respectively. The power measurement point 131 measures power consumption of the servers 101a to 101b in the server rack 101. The power measurement point 132 measures power consumption of the servers 102a to 102b in the server rack 102. The power measurement point 133 measures power consumption of the servers 103a to 103b in the server rack 103. Data measured by the power measurement points 131 to 133 is collected by the power measurement system 130 as the workload information.

In the present embodiment, the power consumption of each rack is measured. However, power consumption of each IT equipment unit may be obtained as the workload information. Instead of directly measuring the power consumption by an ammeter or the like as the workload information, the workload information may be calculated from a CPU utilization of the central processing unit (CPU) in the server when the IT equipment unit is a server, and the workload information may be calculated from the amount of data transmission when the IT equipment unit is a storage device or a network device. In other words, when the execution processing unit obtains the workload information, the execution processing unit can use a result calculated based on information indicating a state of an IT equipment unit, such as the CPU utilization and the amount of data transmission.

In the present embodiment, information of three inlet air temperature sensors is used for each rack as the environment information. However, as described above, the method of the present embodiment may have an arbitrary number and arbitrary positions of the temperature sensors. For example, only one temperature sensor may be provided in an upper portion of each rack, only the temperature sensor included inside an IT equipment unit may be used, one temperature sensor may be disposed every two racks, and a temperature sensor disposed at a representative position in the room may be used. Thereby, even in an environment of a data center having a smaller number of sensors, learning can be performed at a level of accuracy according to the number of pieces of obtained information.

Although, in the present embodiment, the power consumption of each rack is measured as the workload information, the method of the present embodiment can be applied to a case in which power consumption of each IT equipment unit is measured or calculated and a case in which power consumption of each IT equipment unit group including an arbitrary number of IT equipment units is measured or calculated. Thereby, optimization of workload placement can be applied at an arbitrary granularity.

Time synchronization is performed between the temperature measurement system 120 and the power measurement system 130 and operation data 171 is stored in a database (DB) of the operation history 10 as a record including data of environment information measured by the temperature measurement system 120, data of workload information measured by the power measurement system 130, and a time stamp which is time information. Operating information of the cooling facility 180 in Fig. 1, for example, information of a set temperature, a set air volume, an air conditioning operating mode, a measured discharge air temperature, and a measured discharge air volume may be obtained. Also, in this case, the operating information is stored and accumulated in the operation history 10.

The IT workload placement optimization function 20 of the present embodiment performs optimization of the workload of the information processing system by using various data stored in the operation history 10 and outputs a workload placement directive 161 to the workload management server 160. The workload management server 160 performs workload placement 162 on each server 101a to 103b in the server room 100 through the management network described above. In this case, as described in an embodiment below, the IT workload placement optimization function 20 may use the current operation data 171 outputted from the temperature measurement system 120 and the power measurement system 130 without change along with the data stored in the operation history 10.

In the present embodiment, the IT workload placement optimization function 20 transmits the workload placement directive 161 to the workload management server 160. The workload management server 160, which receives the directive, places workload on each server included in the server room 100 and performs the workload placement 162 on each server through the management network.

In the present embodiment, the IT workload placement optimization function 20, the workload management server 160, the temperature measurement system 120, the power measurement system 130, the database of the operation history 10, and the cooling facility 180 are constructed as systems such as servers located outside the server room 100. However, as a modified embodiment, the systems of the execution processing unit of the operation management or the cooling facility 180 may be installed in the server room 100. In this case, the power consumption and the workload placement of the systems of the operation management execution processing unit and the cooling facility which are included in the server room 100 may be targets of the IT workload placement optimization function 20.

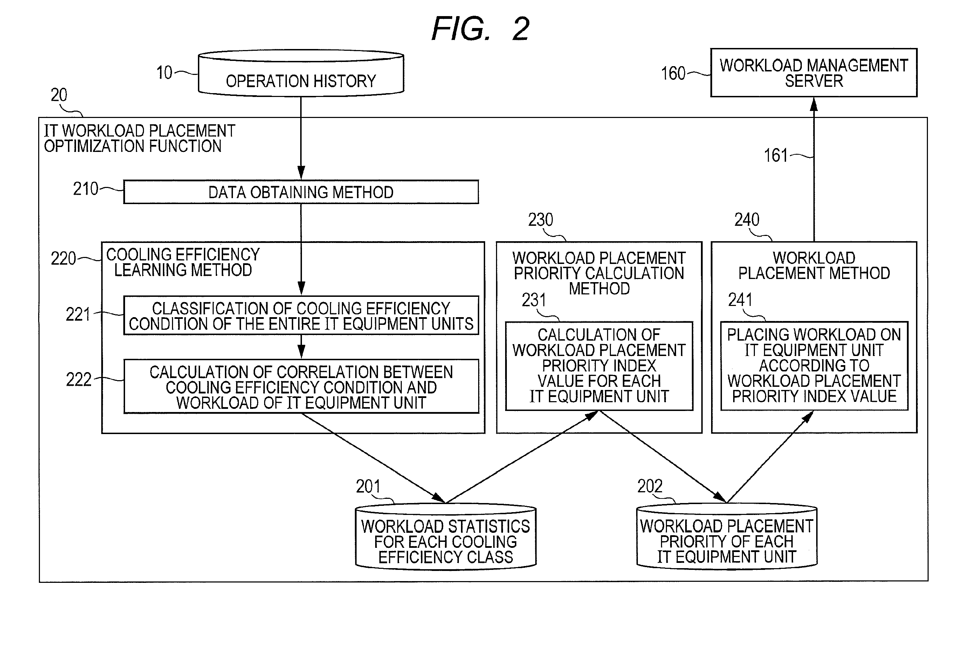

Fig. 2 is a functional block diagram showing a detailed example of the IT workload placement optimization function 20 of the first embodiment. The IT workload placement optimization function 20 has the operation history 10 as an input, includes workload statistics 201 which is workload statistics information for each cooling efficiency class and a workload placement priority 202 for each IT equipment unit as generation data, and further includes a data obtaining method 210, a cooling efficiency learning method 220, a workload placement priority calculation method 230, and a workload placement method 240.

As described above, the IT workload placement optimization function 20 can be a server including a CPU which is a processing unit, a storage unit, and an input/output unit. The IT workload placement optimization function 210 stores the workload statistics 201 which is workload statistics information for each cooling efficiency class and the workload placement priority 202 for each IT equipment unit which are generated from data obtained by the data obtaining method 210 by using the cooling efficiency learning method 220, the workload placement priority calculation method 230, and the workload placement method 240, which can be realized by program processing by the CPU, into the storage unit as the generation data.

The cooling efficiency learning method 220 has data obtained by the data obtaining method 210 from the operation history 10 as an input, performs classification 221 of cooling efficiency condition of the entire IT equipment units, performs calculation 222 of correlation between the cooling efficiency condition, which is a result of the classification 221 of cooling efficiency condition of the entire IT equipment units, and workload of IT equipment unit, and has the workload statistics 201 for each cooling efficiency class as an output.

The workload placement priority calculation method 230 has the workload statistics 201 for each cooling efficiency class as an input, performs calculation 231 of workload placement priority index value for each IT equipment unit, and has the workload placement priority 202 for each IT equipment unit as an output. As described later, the workload statistics 201 of the present embodiment holds at least two data pieces for each IT equipment unit for each cooling efficiency class. However, the workload placement priority 202 for each IT equipment unit holds one data piece for each IT equipment unit by the calculation 231 of workload placement priority index value.

The workload placement method 240 has the workload placement priority 202 for each IT equipment unit as an input, includes a method 241 for placing a workload on an IT equipment unit according to the workload placement priority index, and can perform workload placement optimization by outputting the workload placement directive 161 from the workload placement method 240 to the workload management server 160.

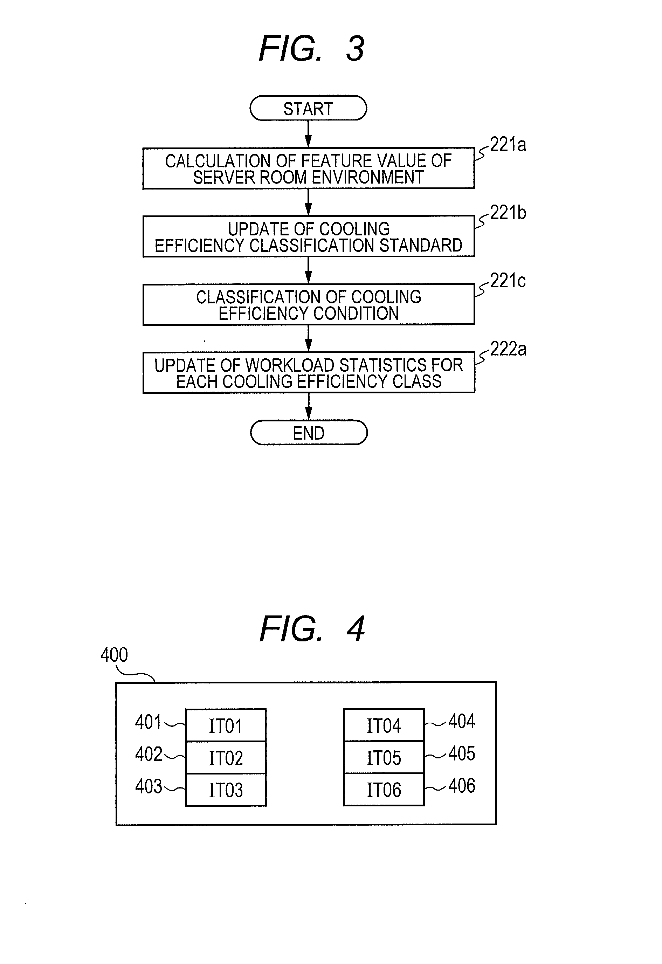

Fig. 3 shows an example of a process flow of the cooling efficiency learning method 220 of the present embodiment. As described above, the process of the cooling efficiency learning method 220 is realized by a program or the like executed by the CPU of the server including the IT workload placement optimization function 20. A calculation 221a of feature value of the server room environment is performed on the data obtained by the data obtaining method 210 from the operation history 10 and an update 221b of cooling efficiency classification standard is performed. Next, a classification 221c of cooling efficiency condition is performed. Finally, an update 222a of workload statistics for each class is performed. At this time, the workload statistics for each class represents the correlation between the amount of workload for each IT equipment unit and the cooling efficiency.

Next, a specific processing procedure of the operation management method of the information processing system according to the first embodiment will be described.

First, Fig. 4 shows an example of an arrangement of IT racks IT01 to IT06 such as server racks in the server room 400, which is an installation room of the IT equipment units to be managed. In other words, the server room 400 includes IT racks 401 to 406. Each of these IT racks 401 to 406 includes inlet air temperature sensors as temperature measurement points and a power measurement point in a state as shown in Fig. 1. Workload is placed on a server mounted on each IT rack IT01 to IT06 on the basis of the workload placement 162 based on measurement results of the temperature sensors and the power measurement point.

Each server has a power supply control function for each blade or each chassis and has a function to consume power according to workload. If there are servers that cannot control power supply, power supply control is applied to only servers that can control power supply.

As described above, a plurality of inlet air temperature sensors, which are the temperature measurement points, are arranged in each server rack. When temperature information for each server rack is desired to be used, measurement data may be integrated into one piece of sensor information by calculating average/maximum/minimum and the like.

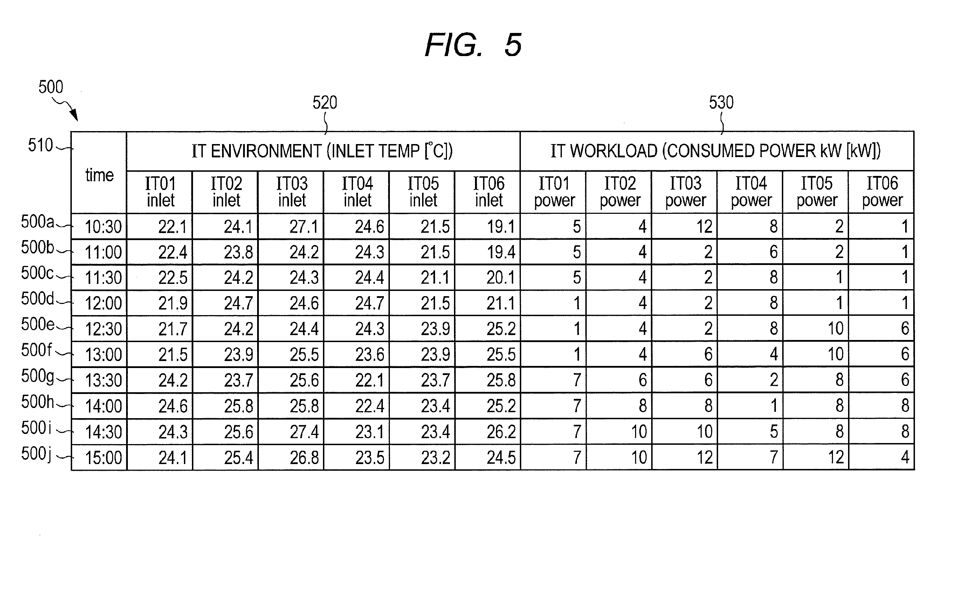

Fig. 5 is a diagram showing an example of a record group 500 included in the operation history 10 in which measurement data of the temperature measurement system 120 and the power measurement system 130 of the present embodiment are accumulated. The record group 500 of the operation history includes records 500a to 500j and each record includes time information 510, inlet air temperature 520 for each IT rack IT01 to IT06 as the environment information of the server room, and power consumption 530 for each IT rack IT01 to IT06 as the workload information of an IT equipment unit. The record group 500 is used by the IT workload placement optimization function 20.

In the present embodiment, the data obtaining method 210 of the operation history obtains data from 10:30 to 15: 00 every 30 minutes. However, the data may be obtained during any time period at any time interval. Thereby, it is possible to adjust so that too much data is not obtained, and data having different correlation between the cooling efficiency condition and the workload of an IT equipment unit may be obtained depending on a time period.

It is possible to include not only the method of obtaining data on the basis of time such as a time stamp, but also a method of obtaining data on the basis of a temperature, a workload, an air volume of the air conditioning, and an operating mode of the air conditioning.

For example, it is possible to include a method of obtaining data on the basis of a temperature range in the server room. Here, a case in which data is obtained on the basis of a temperature range includes a case where upper and lower limit values of the temperature range in which data is obtained are specified, such as a case where all values of temperature information are higher than or equal to 18°C and lower than or equal to 28°C. In this case, a driving condition of the air conditioning and a rotation speed of a fan of the servers change depending on the temperature condition in the server room, so that it is possible to obtain data having different characteristics. For example, when 28°C is set to the upper limit value of the allowable temperature in the server room, if the temperature rises higher than 28°C, the air conditioning operates in a failure mode and operates at maximum power, so that the characteristics of the cooling efficiency is different, and thus a more accurate learning result can be obtained when data obtained in this case is removed from the learning data.

Further, it is possible to include a method of obtaining data on the basis of a total amount of IT power consumption. A case in which data is obtained on the basis of a total amount of IT power consumption includes a case in which upper and lower limit values of the total amount of IT power consumption are specified, such as a case in which the total amount of IT power consumption are greater than or equal to 10 KW and smaller than or equal to 100 KW. In this case, the cooling capacity of the air conditioning changes depending on the total amount of IT power consumption, so that it is possible to obtain data having different characteristics.

Further, it is possible to include a method of obtaining data on the basis of an air volume of the air conditioning, which includes a case in which upper and lower limit values of the air volume are specified and data is obtained. In this case, the smaller the air volume of the air conditioning is, the larger the variation of the temperature environment is, so that it is possible to obtain data having different characteristics depending on the air volume.

Further, it is possible to include a method of obtaining data on the basis of an air conditioning operating mode, which includes a case in which modes defined by the number of air conditioners are used and a case in which the air conditioner is an air-circulation air conditioner and air conditioning operating modes including an outside air mode, a return air cooling mode, and a dehumidification mode are used. In this case, an air flow in the server room changes depending on the number of air conditioners and the air conditioning operating mode, so that it is possible to obtain data having different characteristics. The above cases will be described later in detail as a third embodiment.

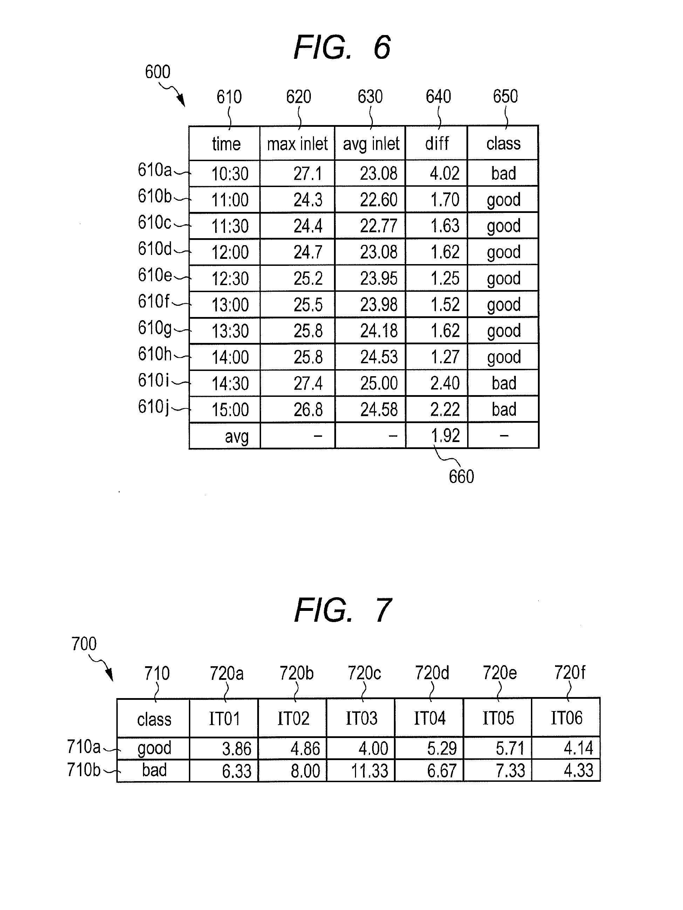

Fig. 6 shows an example of a calculation result 600 by processing of the classification 221 of cooling efficiency condition of the entire IT equipment units in the IT workload placement optimization function 20 of the present embodiment. The classification 221 of cooling efficiency condition of the entire IT equipment units includes a method of performing classification by first calculating a parameter to be a feature value of the cooling efficiency condition and calculating a threshold value to perform classification and a method of performing classification by calculating a feature value by a probability model such as the Gaussian distribution and using a classifier such as a support vector machine.

In the present embodiment, the calculation is performed according to the process flow shown in Fig. 3. In the calculation 221a of feature value of the server room environment for classifying the cooling efficiency, a difference (diff) between a maximum value (max inlet) and an average value (avg inlet) of the inlet air temperature of each server is used as a feature value. The update 221b of cooling efficiency classification standard is performed by using an average (avg) of the differences (diff) of all the records as a threshold value.

Specifically, in each record 610a to 610j in Fig. 6, a maximum value (max inlet) 620 and an average value (avg inlet) 630 of the IT inlet air temperatures in a record are calculated and a difference (diff) 640 between the maximum value and the average value is calculated in the record. Next, the cooling efficiency condition is classified by using the feature value 640. In the records 610a to 610j, an average value (avg) 660 of the differences (diff) 640 between the maximum value and the average value in each record 610a to 610j is calculated and the average value (avg) 660 is used as a threshold value to classify the cooling efficiency condition.

The threshold value is compared with the difference (diff) 640 between the maximum value and the average value in each record 610a to 610j, and when the difference (diff) 640 in each record is greater than the average value (avg) 660 of the differences, the class of the cooling efficiency is defined as bad, and when the difference (diff) 640 is smaller than the average value (avg) 660, the class of the cooling efficiency is defined as good. As a result, in the records 610a to 610j, the records 610a, 610i, and 610j are classified as bad cooling efficiency and the other records are classified as good cooling efficiency. As a result, in the example of Fig. 6, the cooling efficiency condition is classified into two cooling efficiency conditions including the good cooling efficiency and the bad cooling efficiency.

As another example of the feature value, there is a feature value obtained by dividing a maximum value of the server inlet air temperature and the power consumption of the air conditioner by the power consumption of the IT equipment. In the present embodiment, the threshold value of the classification of the cooling efficiency condition is calculated as an average value of the target records. However, a value given in advance to a system administrator or a system designer may used as the threshold value. For example, when the maximum value of the server inlet air temperature is used as the threshold value, the classification may be performed using 25°C as the threshold value. In this case, when the temperature is higher than 25°C, it can be classified as the bad cooling efficiency, and when the temperature is lower than 25°C, it can be classified as the good cooling efficiency.

Fig. 7 shows data 700 of the workload statistics 201 for each IT rack IT01 to IT06 for each cooling efficiency class, which is a calculation result of the calculation 222 of statistics of the correlation between the cooling efficiency condition and the workload of IT equipment unit in the IT workload placement optimization function 20 shown in Fig. 2 of the present embodiment. The data 700 of the workload statistics includes a class 710 of the cooling efficiency condition. In the present embodiment, the class 710 of the cooling efficiency condition includes two classes of a good class 710a and a bad class 710b. The data 700 of the workload statistics includes statistics information 720a to 720f of the amount of workload of each IT equipment unit for each class 710a and 710b.

A representation method of the statistics information of the amount of workload includes a method of representing the statistics information by a value of scalar, vector, or matrix and a method representing the statistics information by a probability model of these. In the present embodiment, the statistics information 720a to 720f of each IT equipment unit in each class 710 is an arithmetic average in each IT equipment unit of IT power consumption 530 corresponding to each class in the record 500 included in the operation history in Fig. 5. For the statistic information, for example, a probability density function assuming a probability distribution such as the Gaussian distribution may be used.

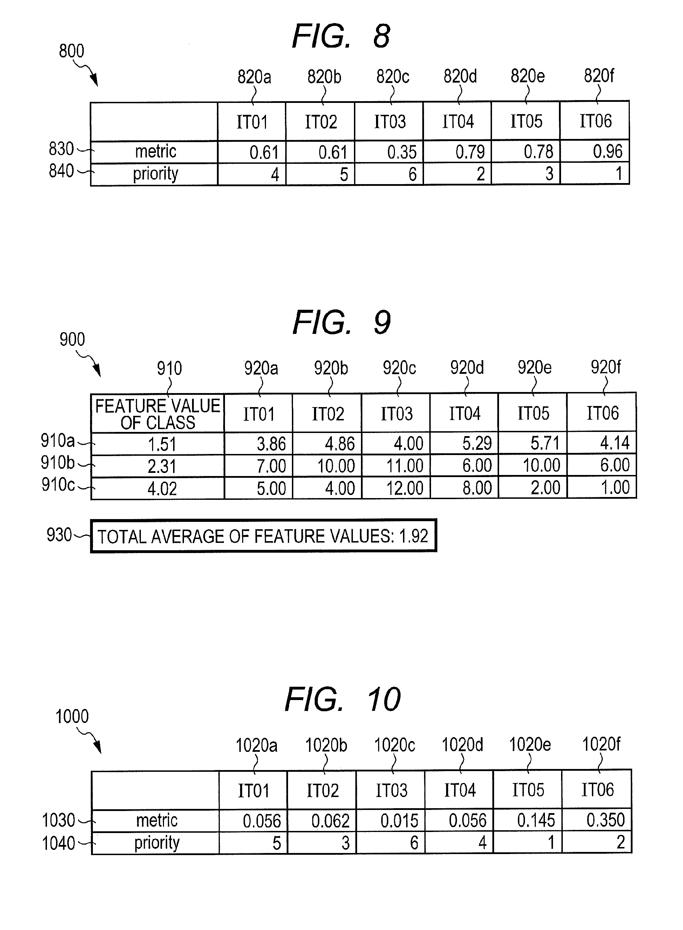

Fig. 8 shows a calculation result 800 of the calculation 231 of workload placement priority index value for each IT equipment unit in the IT workload placement optimization function 20 of the present embodiment. The calculation result 800 of the workload placement priority index value includes information 820a to 820f of each IT equipment unit as a workload placement index value 830 and a workload placement priority 840. The workload statistics 700 for each cooling efficiency class represents a correlation between the workload and the cooling efficiency, so that it is desired that the calculation 231 of workload placement priority index value sets a priority index having characteristics in which an IT equipment unit having a large workload when the cooling efficiency is good is preferentially used and an IT equipment unit having a large workload when the cooling efficiency is bad is not used as much as possible. Therefore, a calculation is performed which obtains a priority index having the above characteristics from the workload statistics which is statistics information of the amount of workload. A calculation that can obtain the above characteristics includes, for example, weighted arithmetic average and weighted geometric average. At this time, an object is to prioritize the IT equipment units on which workload is placed, so that, for example, when the weighted geometric average is employed, no radical root is used in the calculation process to simplify the calculation and statistics exponentiated by the number of statistics may be used for the weighted geometric average of each statistics.

In the present embodiment, the workload placement index value 830 of IT equipment unit for each IT rack IT01 to IT06 is calculated by dividing the statistics 710a of good cooling efficiency by the statistics 710b of bad cooling efficiency for the statistics information 720a to 720f of each IT equipment unit in the data 700 of the workload statistics for each cooling efficiency class. When the workload placement index value of an IT equipment unit i is $metric_i$, the workload statistics of good cooling efficiency is $IT\_good_i$, and the workload statistics of bad cooling efficiency is $IT\_bad_i$, the calculation formula (Formula 1) of the workload placement index value $metric_i$ is as follows:

$$metric_i = IT\_good_i/IT\_bad_i \qquad - - - - - (Formula\ 1)$$

Here, the workload placement index value 830 is calculated by dividing the statistics 710a of good cooling efficiency by the statistics 710b of bad cooling efficiency. However, the workload placement index value 830 may be obtained by calculating a weighted arithmetic average or a weighted geometric average of each statistic.

Finally, the workload placement priority 840 is set in descending order of the workload placement index value 830 of each IT equipment unit. At this time, a unique priority need not necessarily be set to all the IT equipment units and the same priority may be set to a plurality of IT equipment units. For example, an average value of the workload placement index values is used as a threshold value, and a high priority may be set to an IT equipment unit having a good cooling efficiency and a low priority may be set to an IT equipment unit having a bad cooling efficiency.

According to the present embodiment, the workload is placed on the basis of the calculated workload placement priority 840, so that power saving can be realized by performing workload placement considering the cooling efficiency.

Second Embodiment

In the present embodiment, the cooling efficiency learning method 220 of the first embodiment has a function to classify the cooling efficiency into multiple values instead of binary values of good and bad of the cooling efficiency by digitalizing the class. Hereinafter, points different from the first embodiment will be mainly described and the same description as that of the first embodiment will be omitted.

In the same manner as in the first embodiment, the system configuration and the process flow of the present embodiment are shown by the system configuration diagram in Fig. 1 and the block diagram in Fig. 2. The difference of the second embodiment from the first embodiment is that, first, the cooling efficiency learning method 220 recognizes each class by using a feature value to classify the class into multiple values. The cooling efficiency learning method 220 has a function to digitalize each class by a feature value by using the feature value 640 of the server room environment shown in Fig. 6 for classifying the cooling efficiency condition.

Fig. 9 shows data 900 of workload statistics of each IT rack IT01 to IT06 for each cooling efficiency class according to the present embodiment. In the present embodiment, the difference between the highest temperature and the lowest temperature is used as a feature value of the server room environment. Here, the class of the cooling efficiency condition is classified into three classes by using threshold values of 2°C and 3°C. The data 900 includes feature values 910 of each class. Also, the data 900 includes a total average 930 of the feature values. In Fig. 9, reference numeral 910a denotes a class 1 indicating that the temperature difference is smaller than 2°C, reference numeral 910b denotes a class 2 indicating that the temperature difference is greater than or equal to 2°C and smaller than 3°C, and reference numeral 910c denotes a class 3 indicating that the temperature difference is greater than or equal to 3°C. The data 900 includes information 920a to 920f for each IT equipment unit. In the present embodiment, there are three classes. However, the cooling efficiency may be classified into any number of classes and the cooling efficiency may be classified by any classification method, such as, for example, the class is further classified into four classes by average value $\pm$ standard deviation, data of a different time period is classified into another class, or all the records are classified into different classes.

The second difference of the second embodiment from the first embodiment is that one workload placement priority index value is calculated from two or more classes in the calculation 231 of workload placement priority index value for each IT equipment unit.

Fig. 10 shows a calculation result 1000 of the calculation 231 of workload placement priority index value for each IT equipment unit. The calculation result 1000 of the workload placement priority index value includes a workload placement index value 1030 and a workload placement priority 1040. In the calculation 231 of workload placement priority index value, it is desired that, in the IT racks IT01 to IT06, an IT equipment unit having a large workload when the cooling efficiency is good is preferentially used and an IT equipment unit having a large workload when the cooling efficiency is bad is not used as much as possible. Therefore, the workload placement index value 1030 of each IT equipment unit is calculated from the feature values 910 of each class and the total feature value 930 by using Formula 2 for the statistics information 920a to 920f of each IT equipment unit in the data 900 of the workload statistics. When the workload placement index value of an IT equipment unit i is $metric_i$, the workload statistics is $W_i$, the feature value of the cooling efficiency class j is $T\_j$, and the total cooling efficiency feature value is $T\_avg$, the calculation formula (Formula 2) of the workload placement index value is as follows:

$$\mathtt{metric_i} \;=\; \Pi_j \mathtt{W_i}^{(\mathtt{T\_avg-T\_j})} \qquad - - - - - (\text{Formula 2})$$

The Formula 2 is a formula in which radical roots are removed in the calculation process of the weighted geometric average of the workload statistics $W_i$ of the IT equipment unit, and (total average $T\_avg$ of the feature values - feature value $T\_j$ of each class) is used as the weight. When the cooling efficiency is good, $T\_j$ is smaller than $T\_avg$, so that the weight of the exponent is a positive value, which increases $metric_i$. When the cooling efficiency is bad, $T\_j$ is greater than $T\_avg$, so that the weight of the exponent is a negative value, which decreases $metric_i$. The workload placement index value 1030 can be calculated by multiplying these together.

The workload placement priority 1040 is set in descending order of the workload placement index value 1030 of each IT equipment unit by using a result of the above calculation. Since the class is subdivided, it is possible to calculate the cooling efficiency index more accurately than the first embodiment. For example, even in the first embodiment, the characteristics that the cooling efficiency of the IT03 is bad are extracted and the priority 820 of the IT03 is 6 which is the lowest. However, in the first embodiment, the characteristics that the cooling efficiency of the IT05 is good are not extracted and the priority 820 of the IT05 is 3. On the other hand, in the second embodiment, as shown in Fig. 10, the priority 1040 of the IT05 is 1 which is the highest, so that it is found that the second embodiment can extract characteristics that cannot be extracted in the first embodiment.

Third Embodiment

In the first and the second embodiments, the cooling efficiency of the entire server room is classified using the obtained data. However, it is possible to perform segmentation according to the condition of data to be obtained, classify the cooling efficiency for each segment, and set the optimal priority of workload placement for each segment. For example, a case is considered in which a database of classification is segmented by temperature condition or a database of classification is segmented by the total amount of workload of the IT equipment. When segmentation is performed, if a correlation between a cooling efficiency class and workload information varies, it is possible to perform effective learning and accurate classification by performing segmentation.

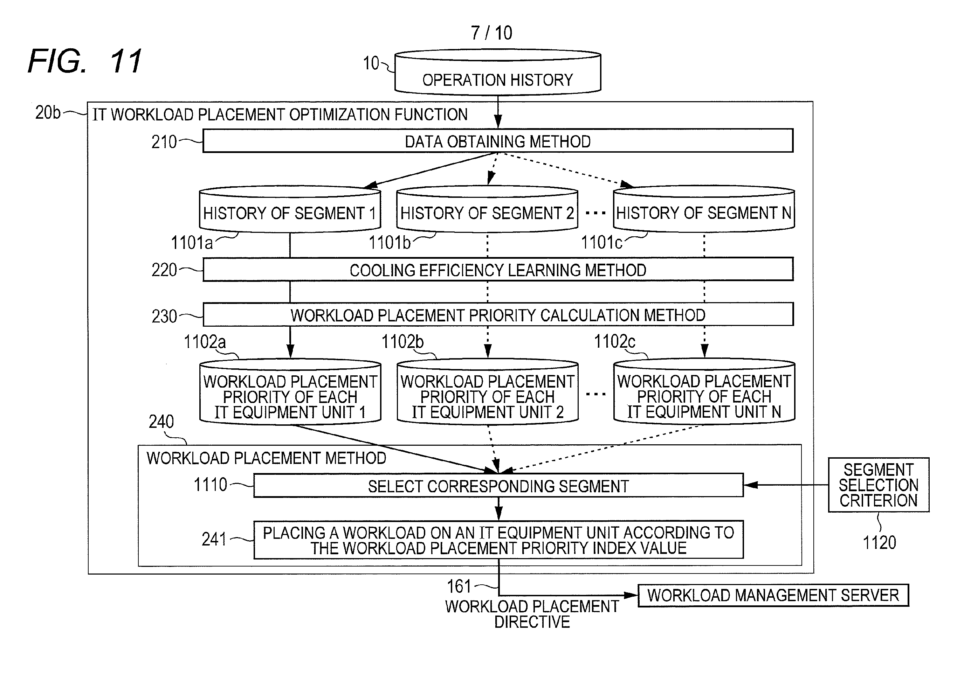

Fig. 11 shows a third embodiment. Hereinafter, points different from the first and the second embodiments will be mainly described and the same description as that of the first and the second embodiments will be omitted.

In the same manner as in the first embodiment, the IT workload placement optimization function 20b has the operation history 10 as an input, includes the workload placement priority 202 for each IT equipment unit as generation data, and further includes the data obtaining method 210, the cooling efficiency learning method 220, the workload placement priority calculation method 230, and the workload placement method 240.

Here, the difference of the IT workload placement optimization function 20b from the IT workload placement optimization function 20 of the first embodiment is that the data obtaining method 210 segments the operation history by considering the temperature condition and the like and includes histories 1101a to 1101c for each segment. For example, the segmentation that considers the temperature condition may be a segmentation in which the maximum value of the IT equipment unit inlet air temperature is classified into three temperature ranges, which are lower than 24°C, higher than or equal to 24°C and lower than 28°C, and higher than or equal to 28°C. The procedure thereafter is the same as that of the first embodiment, and the IT workload placement optimization function 20b has a function to apply the cooling efficiency learning method 220 and the workload placement priority calculation method 230 to each history 1101a to 1101c and generate workload placement priority 1102a to 1102c of each IT equipment unit for each temperature condition. The IT workload placement optimization function 20b has a function 1110 to select a workload placement priority of a segment to be used by using a segment selection criterion 1120 as an input and a function 241 to place a workload on an IT equipment unit according to the selected workload placement priority in the same manner as in the first embodiment. The segment selection criterion 1120 may be specified by an administrator or may be selected from the operation data 171 according to the current server room condition, that is, the temperature condition in the example of Fig. 11.

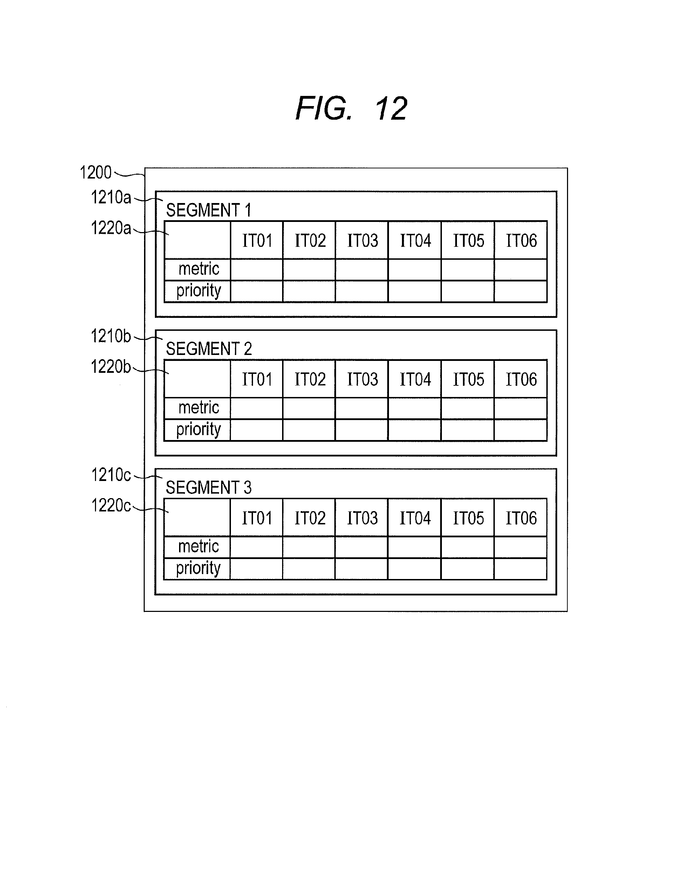

Fig. 12 shows a table configuration 1200 of the workload placement priority according to the present embodiment. The workload placement priority 1200 includes tables 1220a to 1220c of the workload placement priority, each of which corresponds to one segment. The tables 1220a to 1220c have the same structure as that of the workload placement priority 800 in the first embodiment. The difference from the first embodiment is that the tables 1220a to 1220c include labels 1210a to 1210c respectively and it is possible to determine which table corresponds to which segment. In the present embodiment, the segments 1101a to 1101c and, although not shown in Fig. 12, data corresponding to the workload statistics 201 for each cooling efficiency class in Fig. 2 include segment tables and labels corresponding to the segments in the same manner as the workload placement priority 1200.

The example of Fig. 11 has a function to perform segmentation according to the temperature condition. However, there are examples which perform other segmentation. Regarding a segmentation according to a range of a total amount of workload of the IT equipment, for example, there is a case having four segments, which are smaller than 10 KW, greater than or equal to 10 KW and smaller than 20 KW, greater than or equal to 20 KW and smaller than 40 KW, and greater than or equal to 40 KW. Regarding a segmentation according to a range of discharge air volume of the air conditioning, for example, there is a case having three segments, which are smaller than 50m$^3$/m, greater than or equal to 50 m$^3$/m and smaller than 100 m$^3$/m, and greater than or equal to 100 m$^3$/m.

Regarding a segmentation according to a difference of operating mode of the air conditioning, for example, there are a segmentation by the number and combination of operating air conditioners, a segmentation by the presence or absence of power saving control of air conditioner, and a segmentation by a difference of mode, such as an outside air mode, a ventilation cooling mode, and a dehumidification mode of an air-circulation air conditioner. Regarding a segmentation according to time, for example, segmentation is performed by using data of each month separately from each other. In these segmentation operations including the segmentation by the temperature condition, segmentation may be performed by combining conditions.

It is possible to obtain workload placement priority index values for a plurality of segments and calculate a correlation of the workload placement priority index values. In particular, when the segmentation is performed by time, it is possible to extract a segment indicating different characteristics to detect abnormality of the server room environment.

It is possible to integrate a plurality of data sets into a single data set. Or, if there is a change of characteristics, it is possible to perform workload placement optimization by using another data set by using a segmentation function. Regarding such a change of segment, an administrator may specify condition in advance, or when a monitoring system monitors the priority of the cooling efficiency and detects characteristics different from those obtained in advance, for example, when the priority of a certain number or more of IT equipment units is changed, the segmentation may be changed.

Fourth Embodiment

In the first to the third embodiments described above, a case in which the equipment configuration and the sensor information are fixed is described. However, in the present embodiment, a case in which equipment and facility are updated will be described. Further, an operation in which learning data is used while the learning data is sequentially updated will be described.

When the equipment configuration is changed, it is assumed that the numbers of the temperature sensors and power sensors are changed. Also, when a sensor fails, it is assumed that the number of sensors that can be used is changed. First, regarding the increase and decrease of the number of the temperature sensors, since the operation management is performed by using the feature value of the cooling efficiency of each record, for example, the difference between the maximum value and the average value of the server inlet air temperature, a new result may be reflected to a calculation result of the feature value of subsequent records.

On the other hand, when the number of workloads of the IT equipment units is increased or decreased by addition of power sensors or an update of the IT equipment, the workload statistics 201, which is statistics information of the amount of workload for each cooling efficiency class shown in Fig. 2, is modified. According to the change of the number of the workloads of the IT equipment units, the number of data obtained from the operation history needs to be modified. As an example of the modification, each cooling efficiency class may be set to 0 or may be set to an average value of the statistic information of the amount of workload of other IT equipment units. In other words, the execution processing unit can set an average value of the statistic information of the amount of workload of other IT equipment units when modifying the value of the statistic information of the amount of workload according to the change of the number of data obtained from the operation history. Or, the modification method includes a method in which an average value of the statistics information of the amount of workload of IT equipment units adjacent to an arrangement of a newly added IT equipment unit in the server room. Or, an administrator may set an arbitrary value. After the workload statistics 201 for each cooling efficiency class is set, the calculation 231 of the workload placement priority 202 for each IT equipment unit is performed, so that the workload placement priority after the update of the equipment is calculated. Thereafter, learning is performed by using data after the update of the equipment, so that the accuracy of the workload placement priority is improved.

The cooling efficiency learning method 220, the workload placement priority calculation method 230 and the workload placement method 240 can operate independently from each other by using the current data 10, 201, and 202 and can appropriately apply the workload placement optimization by using information learned by that time. In other words, the cooling efficiency class and the workload statistics 201 for each cooling efficiency class may be calculated from data 201 that has already been calculated and newly sampled data, so that an incremental learning function may be included. Examples of the incremental learning includes a method in which the number of learned data pieces N is held and an average is calculated by weighting by the number of the data pieces and a method in which an average is calculated by evenly weighting when the number of learned data pieces N is not held. By these procedures, the learning accuracy is improved while the operation is performed, so that it is possible to realize more power saving workload placement.

Fifth Embodiment

In the first to the third embodiments, values of the temperature difference of the rack inlet air temperatures and power consumption of IT equipment unit at a certain time point are used as the feature value of the cooling efficiency class and the index value of IT workload. However, a difference between values at two time points may be used. As a calculation method of the workload placement priority index value, Formula 1 is used in the first embodiment, and Formula 2 is used in the second embodiment. However, an inclination and a correlation coefficient of a linear regression that uses the feature value of the class as a dependent variable and the IT workload index value as an independent variable may be used. Hereinafter, points different from the first to the third embodiments will be mainly described and the same description as that of the first to the third embodiments will be omitted.

In the fifth embodiment, the inputted operation history is the same as that of the first to the third embodiments. However, as the feature value for the cooling efficiency classification in the cooling efficiency learning method 220, instead of the difference between the maximum value and the average value of the inlet air temperature of each IT equipment unit, a difference between the inlet air temperatures at two time points, for example, a difference between a value at a target time point and a value at a time point of 10 minutes before the target time point, is used.

Similarly, as an index value of workload of IT equipment unit, in the first embodiment, the power consumption of each IT equipment unit is used. However, a difference between the power consumption values of an IT equipment unit at two time points, for example, a difference between a value and a value of 10 minutes before, is used. Such a difference is used, so that a feature of variation of the IT workload and the IT equipment unit inlet air temperature can be learned, and thus the accuracy of derived cooling efficiency can be improved.

In the present embodiment, regarding the cooling efficiency class, all the records are handled as different cooling efficiency class. Further, in the present embodiment, in the calculation 231 of workload placement priority index value in Fig. 2, when performing the calculation of workload placement priority index value for each IT equipment unit, the reciprocal of an inclination of a linear regression that uses the feature value of the cooling efficiency class as a dependent variable and the IT workload index value as an independent variable is obtained as the priority index value.

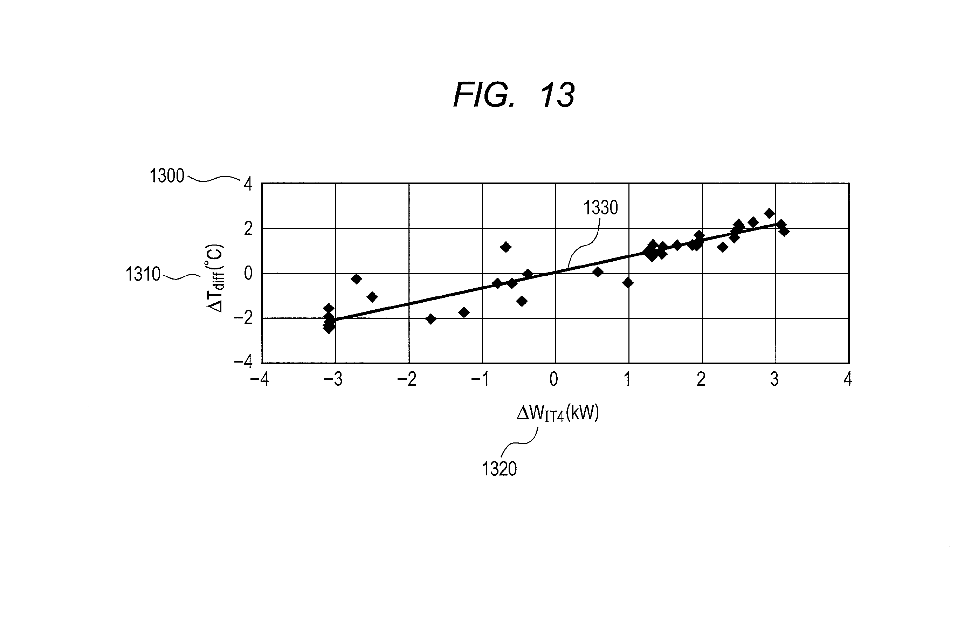

Fig. 13 shows a calculation example 1300 of the workload placement priority. The vertical axis represents index value 1310 of the cooling efficiency class, and the horizontal axis represents statistics 1320 of the IT workload. Values calculated from the operation history are plotted on the graph. Linear regression is performed on this data and the reciprocal of the inclination of the line 1330 is obtained as the priority index value. The smaller the priority index value is, the more the IT workload index value affects the cooling efficiency condition. In other words, the increase of the workload on the IT equipment unit causes the increase of the temperature, so that it can be said that the cooling efficiency is bad. Or, instead of the reciprocal of the inclination, the reciprocal of a product of the inclination and the correlation coefficient may be obtained as the priority index value.

Sixth Embodiment

Next, as a sixth embodiment, an embodiment will be described in which air conditioners, which are a cooling facility, are installed in the server room, which is an installation room of IT equipment, along with the IT racks IT01 to IT16.

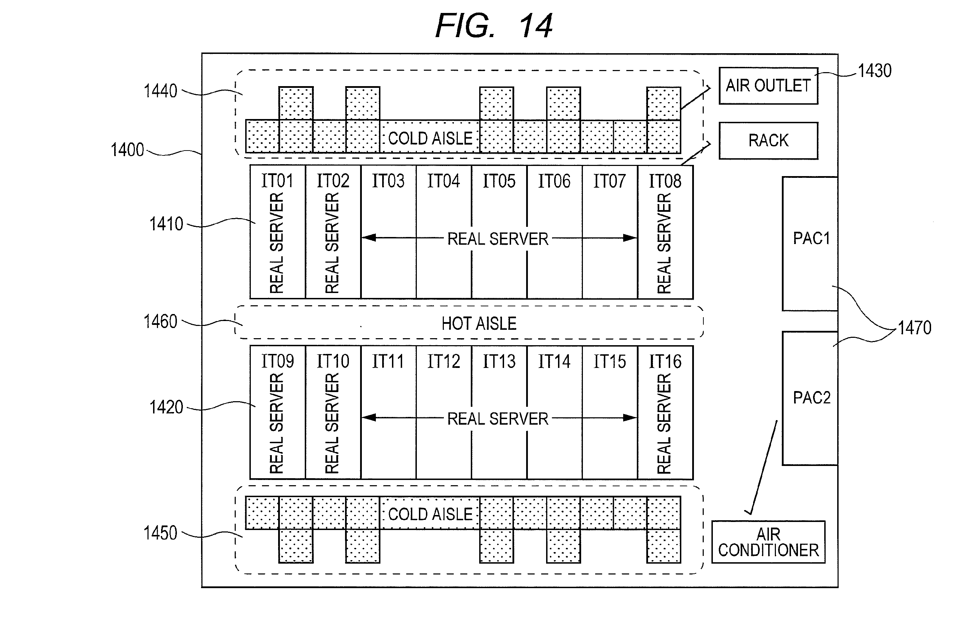

Fig. 14 shows a plan view of a configuration of the server room of the sixth embodiment. In the server room 1400, the IT racks IT01 to IT16 are installed in two rows 1410 and 1420. On both sides of the rows of the IT racks IT01 to IT16, air outlets 1430 are provided and cold aisles 1440 and 1450 are formed. A hot aisle 1460 is formed between the two rows. Air for air conditioning is brown out from the air outlets 1430 by the air conditioners 1470. Each of the IT racks includes a blade server chassis. The 16 IT racks are arranged into two rows of 8 racks (IT01 to IT08 and IT09 to IT16). Cold aisles 1440 and 1450 to which air from the air conditioners 1470 is transferred through the air outlets 1430 are formed outside the rack rows 1410 and 1420. A hot aisle 1460 to which warm air is exhausted from the back of the racks is formed inside the rack rows 1410 and 1420. In the present embodiment, the two air conditioners 1470 are controlled by an air conditioner control unit (not shown in the drawings) located outside the server room 1400. The air conditioner control unit performs control to reduce air volume of the air conditioners and increase the supply air temperature within a range in which the maximum rack temperature does not exceed the upper limit of the environment temperature, so that the air conditioner control unit reduces the total air conditioning power.

In the present embodiment, the air conditioners 1470, which are a cooling facility, are installed inside the server room 1400, so that, as described above, the power consumption of the air conditioners can be a target of the IT workload placement optimization function by measuring the power consumption of the air conditioners 1470 by corresponding power measurement points.

In the present embodiment, the IT workload placement optimization function reduces the number of operating IT equipment units, collects business systems into the operating IT equipment units by using VM migration, and cuts off power to unnecessary IT equipment units within a range in which resources of the operating IT equipment units does not fall below the necessary resources of the information processing system, so that the IT workload placement optimization function reduces the total IT power. Further, when the total IT power decreases, the heat load of the air conditioners decreases, so that the total air conditioner power also decreases.

The present invention is not limited to the embodiments described above and includes various modified examples. For example, the above embodiments are described in detail in order to easily understand the present invention and the present invention is not necessarily limited to embodiments that include all the configurations described above. Further, a part of a configuration of an embodiment can be replaced by a configuration of another embodiment and a configuration of an embodiment can be added to a configuration of another embodiment. Another configuration can be added to, deleted from, and replaced to a part of a configuration of each embodiment.

Some or all of the above configurations, functions, processing units, processing methods, and the like may be realized by hardware by, for example, designing them using an integrated circuit. In the above description, the configurations and the functions are realized by software by executing programs that realize these functions. However, information such as programs, tables, and files can be stored not only in memory, but also in a recording device such as a hard disk and an SSD (Solid State Drive) or a recording medium such as an IC card, an SD card, and a DVD, and further can be downloaded and installed through a network or the like as needed.

The present invention can be applied to an integrated power saving operation management in an information management system including information processing devices such as servers, storages, and networks and a cooling facility. In particular, the present invention is suitable for a data center.

The present invention is used for autonomous operational management of an information processing system. Further, the present invention can be applied to a wide range of use, such as a system construction tool, a power saving diagnosis tool, an operation monitoring tool, and a supplementary tool of an operations manager and facilities manager.

Although the present invention is mainly applied to information processing devices, the present invention can be applied to any device that consumes electric power or energy and facilities for the device. For example, the present invention can be applied to operation and control of an electric device, a mechanical device, a power plant, a heat plant, and the like.

In the detailed description of the embodiments of the present invention, inventions other than the inventions described in the claims are disclosed. Examples of these are as follows:

(Example 1) A system operation management method for obtaining an index value for each IT equipment unit on which a workload is placed, the system operation management method comprising:

a section that obtains data including time information, server room environment information, and IT equipment unit workload information from an operation history;
a section that classifies a cooling efficiency condition of an entire IT equipment by using a feature value calculated from data obtained from the operation history;
a section that calculates statistics information of an amount of workload of each IT equipment unit for each class of the cooling efficiency; and
a section that obtains a workload placement index from a combination of at least two pieces of statistics information of the statistics information of the amount of workload.

(Example 2) The system operation management method according to Example 1,
wherein a server room in which a target system is operated includes
IT equipment units such as server device, storage device, and network device,
a section that obtains time information, server room environment information, and IT equipment unit workload information, and
a cooling facility that cools the IT equipment units,
the system has a function to place a workload on the IT equipment unit, and
the IT equipment unit has a function to perform power supply control according to an amount of workload.
(Example 3) The system operation management method according to Example 2,
wherein the section that obtains server room environment information and IT equipment unit workload information uses a sensor included in an IT equipment unit.
(Example 4) The system operation management method according to Example 1,
wherein the section that obtains data including time information, server room environment information, and IT equipment unit workload information from the operation history has a function to extract data where time is similar.
(Example 5) The system operation management method according to Example 1,
wherein the section that obtains data including time information, server room environment information, and IT equipment unit workload information from the operation history has a function to extract data where a total amount of workload is similar.
(Example 6) The system operation management method according to Example 1,
wherein the section that obtains data including time information, server room environment information, and IT equipment unit workload information from the operation history has a function to extract data where temperature condition is similar.
(Example 7) The system operation management method according to Example 1,
wherein the section that obtains data including time information, server room environment information, and IT equipment unit workload information from the operation history has a function to extract data where air volume of air conditioning is similar.
(Example 8) The system operation management method according to Example 1,
wherein the section that classifies a cooling efficiency condition of an entire IT equipment by using a feature value calculated from data obtained from the operation history has a function to perform digitalization for recognizing the class, and the digitalized value is an average of the feature values in data included in the class.
(Example 9) The system operation management method according to Example 8, further comprising:

a section that remove radical roots from a weighted geometric average of statistics information of an amount of workload as the section that obtains a workload placement index from a combination of at least two pieces of statistics information of the statistics information of the amount of workload,

wherein a weight of the weighted geometric average is a difference between an entire value of the value digitalized for recognizing the class and a value of each class.

(Example 10) An operation management device for managing an operation of an information processing system including an execution processing unit and a plurality of information technology (IT) equipment units,
wherein the execution processing unit
obtains data including time information, environment information, and workload information from an operation history of a plurality of the IT equipment units, classifies a cooling efficiency of the entire IT equipment units on the basis of the data obtained from the operation history, calculates statistics information of an amount of workload of each IT equipment unit for each class of the cooling efficiency, and obtains a workload placement priority of the IT equipment unit on the basis of the calculated statistics information.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

**Claims**

1.  An operation management method of an information processing system including an execution processing unit and a plurality of information technology (IT) equipment units (101a - 103b),
    wherein the execution processing unit
    obtains data including time information, environment information, and workload information from an operation history (10) of a plurality of the IT equipment units (101a - 103b),
    calculates a feature value from the data obtained from the operation history (10),
    classifies a cooling efficiency of the entire IT equipment units (101a - 103b) on the basis of the calculated feature value,
    calculates statistics information of an amount of workload of each IT equipment unit (101a - 103b) for each class of the cooling efficiency, and
    obtains a workload placement index value of the IT equipment unit (101a - 103b) on the basis of the calculated statistics information.

2.  The operation management method according to claim 1,
    wherein when the execution processing unit obtains the workload placement index value on the basis of the statistics information, the execution processing unit obtains the workload placement index value from a combination of at least two pieces of the statistics information.

3.  The operation management method according to claim 1 or 2,
    wherein a plurality of the IT equipment units (101a - 103b) are installed in one installation room (100),
    the information processing system includes a cooling facility (180) that cools a plurality of the IT equipment units (101a - 103b), and
    the execution processing unit obtains data including the time information, the environment information, and the workload information from the installation room (100) and places a workload on a plurality of the IT equipment units (101a - 103b) by using the obtained workload placement index value.

4.  The operation management method according to at least one of claims 1 to 3,
    wherein when the execution processing unit obtains the workload information, the execution processing unit uses a result calculated based on information indicating a state of the IT equipment unit (101a - 103b).

5.  The operation management method according to at least one of claims 1 or 2,
    wherein when the execution processing unit obtains the data including the time information, the environment information, and the workload information, the execution processing unit extracts data where an air conditioning operating mode in the installation room (100) is the same.

6.  The operation management method according to at least one of claims 1 to 5,
    wherein the execution processing unit uses a difference between a maximum value and an average value of the temperature information obtained from the operation history (10) as the feature value.

**7.** The operation management method according to at least one of claims 1 to 5,
wherein the execution processing unit uses a maximum value of the temperature information obtained from the operation history (10) as the feature value.

**8.** The operation management method according to at least one of claims 1 to 7,
wherein when the execution processing unit classifies a cooling efficiency of the entire IT equipment units (101a - 103b) on the basis of the feature value, the execution processing unit performs classification by a threshold value given to the feature value.

**9.** The operation management method according to at least one of claims 1 to 7,
wherein when the execution processing unit classifies a cooling efficiency of the entire IT equipment units (101a - 103b) on the basis of the feature value, the execution processing unit obtains an average of the feature values in the data included in the class in order to recognize the class.

**10.** The operation management method according to at least one of claims 1 to 9,
wherein the statistics information of the amount of workload, which is calculated by the execution processing unit, is an average of statistics information of an amount of workload for each IT equipment unit (101a - 103b) in data included in the class.

**11.** The operation management method according to at least one of claims 2 to 10,
wherein when the execution processing unit obtains the workload placement index value from a combination of at least two pieces of statistics information of the statistics information of the amount of workload, the execution processing unit calculates a weighted average of the two pieces of statistics information.

**12.** The operation management method according to at least one of claims 1 to 11,
wherein the execution processing unit performs segmentation according to the data obtained from the operation history (10) and obtains the class of the cooling efficiency and the workload placement index value for each segment.

**13.** The operation management method according to claim 12,
wherein the execution processing unit synthesizes one pair of a cooling efficiency class and statistics information of an amount of workload from a segmented plurality of pairs of the cooling efficiency class and the statistics information of the amount of workload.

**14.** The operation management method according to claims 12 or 13,
wherein the execution processing unit includes an abnormality detection function of an environment of the installation room (100), and
the abnormality detection function calculates a correlation between the workload placement index values of each segment.

**15.** The operation management method according to at least one of claims 1 to 9,
wherein the execution processing unit sets an average of the statistic information of the amount of workload of other IT equipment units (101a - 103b) when modifying a value of the statistic information of the amount of workload according to a change of the number of data pieces obtained from the operation history (10).

FIG. 1

## FIG. 2

10 — OPERATION HISTORY

160 — WORKLOAD MANAGEMENT SERVER

20 — IT WORKLOAD PLACEMENT OPTIMIZATION FUNCTION

210 — DATA OBTAINING METHOD

161

220 — COOLING EFFICIENCY LEARNING METHOD

221 — CLASSIFICATION OF COOLING EFFICIENCY CONDITION OF THE ENTIRE IT EQUIPMENT UNITS

222 — CALCULATION OF CORRELATION BETWEEN COOLING EFFICIENCY CONDITION AND WORKLOAD OF IT EQUIPMENT UNIT

230 — WORKLOAD PLACEMENT PRIORITY CALCULATION METHOD

231 — CALCULATION OF WORKLOAD PLACEMENT PRIORITY INDEX VALUE FOR EACH IT EQUIPMENT UNIT

240 — WORKLOAD PLACEMENT METHOD

241 — PLACING WORKLOAD ON IT EQUIPMENT UNIT ACCORDING TO WORKLOAD PLACEMENT PRIORITY INDEX VALUE

201 — WORKLOAD STATISTICS FOR EACH COOLING EFFICIENCY CLASS

202 — WORKLOAD PLACEMENT PRIORITY OF EACH IT EQUIPMENT UNIT

EP 2 620 837 A1

# FIG. 3

START

CALCULATION OF FEATURE VALUE OF SERVER ROOM ENVIRONMENT ⟍221a

UPDATE OF COOLING EFFICIENCY CLASSIFICATION STANDARD ⟍221b

CLASSIFICATION OF COOLING EFFICIENCY CONDITION ⟍221c

UPDATE OF WORKLOAD STATISTICS FOR EACH COOLING EFFICIENCY CLASS ⟍222a

END

# FIG. 4

400

| 401 ⟍ | IT01 | | IT04 | ⟍404 |
| 402 ⟍ | IT02 | | IT05 | ⟍405 |
| 403 ⟍ | IT03 | | IT06 | ⟍406 |

## FIG. 5

EP 2 620 837 A1

| time | IT ENVIRONMENT (INLET TEMP [°C]) | | | | | | IT WORKLOAD (CONSUMED POWER kW [kW]) | | | | | |
|---|---|---|---|---|---|---|---|---|---|---|---|---|
| | IT01 inlet | IT02 inlet | IT03 inlet | IT04 inlet | IT05 inlet | IT06 inlet | IT01 power | IT02 power | IT03 power | IT04 power | IT05 power | IT06 power |
| 10:30 | 22.1 | 24.1 | 27.1 | 24.6 | 21.5 | 19.1 | 5 | 4 | 12 | 8 | 2 | 1 |
| 11:00 | 22.4 | 23.8 | 24.2 | 24.3 | 21.5 | 19.4 | 5 | 4 | 2 | 6 | 2 | 1 |
| 11:30 | 22.5 | 24.2 | 24.3 | 24.4 | 21.1 | 20.1 | 5 | 4 | 2 | 8 | 1 | 1 |
| 12:00 | 21.9 | 24.7 | 24.6 | 24.7 | 21.5 | 21.1 | 1 | 4 | 2 | 8 | 1 | 1 |
| 12:30 | 21.7 | 24.2 | 24.4 | 24.3 | 23.9 | 25.2 | 1 | 4 | 2 | 8 | 10 | 6 |
| 13:00 | 21.5 | 23.9 | 25.5 | 23.6 | 23.9 | 25.5 | 1 | 4 | 6 | 4 | 10 | 6 |
| 13:30 | 24.2 | 23.7 | 25.6 | 22.1 | 23.7 | 25.8 | 7 | 6 | 6 | 2 | 8 | 6 |
| 14:00 | 24.6 | 25.8 | 25.8 | 22.4 | 23.4 | 25.2 | 7 | 8 | 8 | 1 | 8 | 8 |
| 14:30 | 24.3 | 25.6 | 27.4 | 23.1 | 23.4 | 26.2 | 7 | 10 | 10 | 5 | 8 | 8 |
| 15:00 | 24.1 | 25.4 | 26.8 | 23.5 | 23.2 | 24.5 | 7 | 10 | 12 | 7 | 12 | 4 |

## FIG. 6

600

| | 610 | 620 | 630 | 640 | 650 |
|---|---|---|---|---|---|
| | time | max inlet | avg inlet | diff | class |
| 610a | 10:30 | 27.1 | 23.08 | 4.02 | bad |
| 610b | 11:00 | 24.3 | 22.60 | 1.70 | good |
| 610c | 11:30 | 24.4 | 22.77 | 1.63 | good |
| 610d | 12:00 | 24.7 | 23.08 | 1.62 | good |
| 610e | 12:30 | 25.2 | 23.95 | 1.25 | good |
| 610f | 13:00 | 25.5 | 23.98 | 1.52 | good |
| 610g | 13:30 | 25.8 | 24.18 | 1.62 | good |
| 610h | 14:00 | 25.8 | 24.53 | 1.27 | good |
| 610i | 14:30 | 27.4 | 25.00 | 2.40 | bad |
| 610j | 15:00 | 26.8 | 24.58 | 2.22 | bad |
| | avg | – | – | 1.92 | – |

660

## FIG. 7

700

| | 710 | 720a | 720b | 720c | 720d | 720e | 720f |
|---|---|---|---|---|---|---|---|
| | class | IT01 | IT02 | IT03 | IT04 | IT05 | IT06 |
| 710a | good | 3.86 | 4.86 | 4.00 | 5.29 | 5.71 | 4.14 |
| 710b | bad | 6.33 | 8.00 | 11.33 | 6.67 | 7.33 | 4.33 |

## FIG. 8

800

|  | IT01 | IT02 | IT03 | IT04 | IT05 | IT06 |
|---|---|---|---|---|---|---|
|  | 820a | 820b | 820c | 820d | 820e | 820f |
| metric | 0.61 | 0.61 | 0.35 | 0.79 | 0.78 | 0.96 |
| priority | 4 | 5 | 6 | 2 | 3 | 1 |

830 — metric
840 — priority

## FIG. 9

900

| FEATURE VALUE OF CLASS | IT01 | IT02 | IT03 | IT04 | IT05 | IT06 |
|---|---|---|---|---|---|---|
| 910 | 920a | 920b | 920c | 920d | 920e | 920f |
| 1.51 | 3.86 | 4.86 | 4.00 | 5.29 | 5.71 | 4.14 |
| 2.31 | 7.00 | 10.00 | 11.00 | 6.00 | 10.00 | 6.00 |
| 4.02 | 5.00 | 4.00 | 12.00 | 8.00 | 2.00 | 1.00 |

910a
910b
910c

930 — TOTAL AVERAGE OF FEATURE VALUES: 1.92

## FIG. 10

1000

|  | IT01 | IT02 | IT03 | IT04 | IT05 | IT06 |
|---|---|---|---|---|---|---|
|  | 1020a | 1020b | 1020c | 1020d | 1020e | 1020f |
| metric | 0.056 | 0.062 | 0.015 | 0.056 | 0.145 | 0.350 |
| priority | 5 | 3 | 6 | 4 | 1 | 2 |

1030 — metric
1040 — priority

## FIG. 11

**10** — OPERATION HISTORY

**20b** — IT WORKLOAD PLACEMENT OPTIMIZATION FUNCTION

**210** — DATA OBTAINING METHOD

HISTORY OF SEGMENT 1 — **1101a**

HISTORY OF SEGMENT 2 — **1101b**

HISTORY OF SEGMENT N — **1101c**

**220** — COOLING EFFICIENCY LEARNING METHOD

**230** — WORKLOAD PLACEMENT PRIORITY CALCULATION METHOD

**1102a** WORKLOAD PLACEMENT PRIORITY OF EACH IT EQUIPMENT UNIT 1

**1102b** WORKLOAD PLACEMENT PRIORITY OF EACH IT EQUIPMENT UNIT 2

**1102c** WORKLOAD PLACEMENT PRIORITY OF EACH IT EQUIPMENT UNIT N

**240** WORKLOAD PLACEMENT METHOD

**1110** — SELECT CORRESPONDING SEGMENT

SEGMENT SELECTION CRITERION

**1120**

**241** — PLACING A WORKLOAD ON AN IT EQUIPMENT UNIT ACCORDING TO THE WORKLOAD PLACEMENT PRIORITY INDEX VALUE

**161** — WORKLOAD PLACEMENT DIRECTIVE

WORKLOAD MANAGEMENT SERVER

EP 2 620 837 A1

# FIG. 12

**SEGMENT 1**

| | IT01 | IT02 | IT03 | IT04 | IT05 | IT06 |
|---|---|---|---|---|---|---|
| metric | | | | | | |
| priority | | | | | | |

**SEGMENT 2**

| | IT01 | IT02 | IT03 | IT04 | IT05 | IT06 |
|---|---|---|---|---|---|---|
| metric | | | | | | |
| priority | | | | | | |

**SEGMENT 3**

| | IT01 | IT02 | IT03 | IT04 | IT05 | IT06 |
|---|---|---|---|---|---|---|
| metric | | | | | | |
| priority | | | | | | |

FIG. 13

EP 2 620 837 A1

## FIG. 14

EP 2 620 837 A1

Europäisches
Patentamt

European
Patent Office

Office européen
des brevets

# EUROPEAN SEARCH REPORT

**Application Number**

EP 13 15 1277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2006/259621 A1 (RANGANATHAN PARTHASARATHY [US] ET AL) 16 November 2006 (2006-11-16) * paragraph [0072] - paragraph [0082]; figure 4b * | 1 | INV. G06F1/20 G06F1/32 |
| A | WO 2011/076486 A1 (IBM [US]; IBM FRANCE [FR]; DI BALSAMO ARCANGELO [IT]; DONATELLI ALEX []) 30 June 2011 (2011-06-30) * page 10, line 12 - page 12, line 20; figure 2 * | 1 | |
| A | EP 2 330 505 A1 (HITACHI LTD [JP]) 8 June 2011 (2011-06-08) * paragraph [0028] - paragraph [0045]; figures 1-11 * | 1 | |

----- 

**TECHNICAL FIELDS SEARCHED (IPC)**

G06F

The present search report has been drawn up for all claims

| Place of search | Date of completion of the search | Examiner |
|---|---|---|
| Munich | 24 May 2013 | Alonso Nogueiro, M |

EPO FORM 1503 03.82 (P04C01)

**ANNEX TO THE EUROPEAN SEARCH REPORT
ON EUROPEAN PATENT APPLICATION NO.**

EP 13 15 1277

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2013

| Patent document cited in search report | | Publication date | Patent family member(s) | | Publication date |
|---|---|---|---|---|---|
| US 2006259621 | A1 | 16-11-2006 | NONE | | |
| WO 2011076486 | A1 | 30-06-2011 | TW | 201137776 A | 01-11-2011 |
| | | | WO | 2011076486 A1 | 30-06-2011 |
| EP 2330505 | A1 | 08-06-2011 | CN | 102099791 A | 15-06-2011 |
| | | | EP | 2330505 A1 | 08-06-2011 |
| | | | JP | 4751962 B2 | 17-08-2011 |
| | | | JP | 2011034578 A | 17-02-2011 |
| | | | US | 2011113273 A1 | 12-05-2011 |
| | | | WO | 2010032501 A1 | 25-03-2010 |

EPO FORM P0459

For more details about this annex : see Official Journal of the European Patent Office, No. 12/82

**EP 2 620 837 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20110161968 A
- US 20060259621 A
- JP 2007179437 A
- JP 2011034578 A
- JP 2011008822 A